(19) **Europäisches Patentamt**
**European Patent Office**
**Office européen des brevets**

(11) **EP 4 625 530 A1**

(12) **EUROPEAN PATENT APPLICATION**
published in accordance with Art. 153(4) EPC

(43) Date of publication:
**01.10.2025 Bulletin 2025/40**

(21) Application number: **23912758.2**

(22) Date of filing: **20.12.2023**

(51) International Patent Classification (IPC):
*H01M 4/1395* (2010.01)    *H01M 4/66* (2006.01)
*H01M 10/052* (2010.01)    *H01M 4/02* (2006.01)

(52) Cooperative Patent Classification (CPC):
**H01M 4/02; H01M 4/1395; H01M 4/66;**
**H01M 10/052;** Y02E 60/10

(86) International application number:
**PCT/KR2023/021144**

(87) International publication number:
**WO 2024/144083 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **26.12.2022 KR 20220184417**

(71) Applicant: **LG Energy Solution, Ltd.**
**Seoul 07335 (KR)**

(72) Inventors:
• **NA, Seon Hyeong**
**Daejeon 34122 (KR)**
• **JEONG, Yeon Beom**
**Daejeon 34122 (KR)**
• **PAENG, Ki Hoon**
**Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR MANUFACTURING ALUMINUM THIN FILM, ALUMINUM THIN FILM, AND POSITIVE ELECTRODE AND SECONDARY BATTERY COMPRISING SAME**

(57)    A method for manufacturing an aluminum thin film according to the present invention comprises the steps of: (A) cutting an aluminum thin film and winding the cut aluminum thin film in one direction; and (B) performing heat treatment on a cut surface including a cut portion of the aluminum thin film in the wound aluminum thin film roll, wherein when the heat treatment temperature is T (unit: °C), and the heat treatment time is t (unit: sec), the heat treatment may be performed to satisfy formula (1). Formula (1): -0.21t + 150 ≤ T ≤ -0.21t + 210

**EP 4 625 530 A1**

**Description**

## TECHNICAL FIELD

This application claims the benefit of priority to Korean Patent Application No. 10-2022-0184417, filed on 12/26/2022, in the Korean Intellectual Property Office, the disclosure of which is incorporated herein in its entirety by reference.

The present invention relates to a method for preparing an aluminum thin film, an aluminum thin film, and a positive electrode and a lithium secondary battery which include the same, and more particularly, to a method for preparing an aluminum thin film heat-treated over a specific temperature and time range to be provided with desired tensile strength and average residual stress values, an aluminum thin film, and a positive electrode and a lithium secondary battery which include the same.

## BACKGROUND ART

In recent years, there has been a dramatic increase in demand for batteries as energy sources with the technical development and increase in demand for Energy Storage System (ESS), and research on batteries capable of meeting various requirements has been conducted accordingly. In particular, research on a lithium secondary battery having a high energy density and also exhibiting excellent lifetime and cycle characteristics as a power source for such devices has been actively conducted.

In general, lithium secondary batteries include a positive electrode, a negative electrode, a separator sandwiched between the positive electrode and the negative electrode, an electrolyte, and the like. The positive electrode may have a structure in which a positive electrode current collector and a positive electrode active material layer are sequentially stacked, and an aluminum thin film is used primarily as the positive electrode current collector.

The aluminum thin film is slit to a desired width and used, and in this case, significant pressure is applied to a slit portion, and thus residual stress may be present in the portion. This may make the aluminum thin film vulnerable to break, such as micro cracks caused in a subsequent process performed after the slitting, and when the aluminum thin film is used in a high-speed roll-to-roll process, the residual stress present in the slit portion may cause breaking during a rolling process.

Accordingly, a technology for reducing the residual stress in the slit portion is needed.

## DISCLOSURE OF THE INVENTION

## TECHNICAL PROBLEM

In order to address the above-described tasks, an aspect of the present invention provides a method for preparing an aluminum thin film heat-treated over a specific temperature and time range to be provided with desired tensile strength and average residual stress values, an aluminum thin film, and a positive electrode and a lithium secondary battery which include the same.

## TECHNICAL SOLUTION

According to an aspect of the present invention, provided is a method for preparing an aluminum thin film, including (A) slitting an aluminum thin film and winding the slit aluminum thin film in one direction, and (B) heat-treating a slit surface including a slit portion of the aluminum thin film in a roll of the wound aluminum thin film, wherein the heat treatment may be performed to satisfy Equation 1 below where heat treatment temperature is indicated as T (unit: °C) and heat treatment time is indicated as t (unit: seconds).

$$\text{Equation 1: } -0.21t + 150 \leq T \leq -0.21t + 210$$

The heat treatment temperature T may be in the range of 25 °C to 200 °C.

The heat treatment time t may be in the range of 50 seconds to 650 seconds.

Residual stress of the slit portion may be reduced by the step (B).

The step (B) may involve heating the slit surface using a heating device having a cross-sectional area greater than an area of the slit surface.

The heating device may include a heat treatment performing portion having a cross-sectional area greater than the area of the slit surface.

The heating device may include an inductive coupling coil disposed to heat the slit surface and may heat the slit surface using an induced current through the inductive coupling coil.

The heating device may include a heating wire disposed to heat the slit surface and may heat the slit surface through the heating wire.

The heating device may be disposed to be spaced apart from the aluminum thin film roll.

According to another aspect of the present invention, provided is an aluminum thin film having a thickness of 10 $\mu$m to 20 $\mu$m, having a tensile strength of 20.0 kgf/mm$^2$ to 30.4 kgf/mm$^2$ in the MD direction, and having an elongation of 1.8% to 2.6% in the MD direction.

An end portion disposed along the MD direction of the aluminum thin film may have an average residual stress of -18.5 MPa to -12.0 MPa.

According to another aspect of the present invention, provided is a positive electrode including the aluminum thin film, and a positive electrode active material layer disposed on at least one side of the aluminum thin film.

According to another aspect of the present invention, provided is a lithium secondary battery including the positive electrode, a negative electrode, and an electrolyte.

## ADVANTAGEOUS EFFECTS

According to the present invention, an aluminum thin film having a desired tensile strength may be prepared by heat-treating a slit surface of an aluminum thin film roll over a specific temperature and time range to soften the aluminum thin film, and this may prevent micro cracks that may be caused during a charging/discharging process.

According to the present invention, residual stress at an end portion of an unwound aluminum thin film may be reduced by heat-treating a slit surface of an aluminum thin film roll over a specific temperature and time range, and this may prevent breaking during a rolling process.

## MODE FOR CARRYING OUT THE INVENTION

Advantages and features of the present disclosure and methods of accomplishing the same may be understood more readily by reference to the following detailed description of embodiments. However, the present disclosure may be embodied in different forms, and these embodiments are provided only to make this disclosure thorough and complete and to fully convey the scope of the present disclosure to those skilled in the art, and thus the present disclosure is defined only by the scope of the appended claims.

Unless otherwise defined, all terms (including technical and scientific terms) used herein have the same meaning as commonly understood by one of ordinary skill in the art to which the present invention belongs. Terms as defined in a generally used dictionary are not construed ideally or excessively unless defined apparently and specifically.

Terms used herein are not for limiting the inventive concept but for describing the embodiments. As used herein, the singular forms include the plural forms as well, unless the context clearly indicates otherwise. The meaning of "comprises" and/or "comprising" as used herein does not exclude the presence or addition of one or more other components besides a mentioned component.

Herein, when an element "includes" a component, it may indicate that the element does not exclude another component unless explicitly described to the contrary, but may further include another component.

Herein, the description "A and/or B" refers to A or B, or A and B.

Herein, "%" refers to wt% unless indicated otherwise.

Herein, "tensile strength" of an aluminum thin film indicates stress just before the break of the aluminum thin film. Specifically, the aluminum thin film was punched out to a size of 12.7 mm $\times$ 150 mm, including a heat-treated portion, and both ends of the aluminum thin film were fastened to an upper jig and a lower jig of Universal Testing Machine (UTM, Zwick) and pulled at a rate of 20 mm/min in a vertical direction to measure a maximum value of tensile strength just before the break of the aluminum thin film.

Herein, surface residual stress of the aluminum thin film is measured through X-ray diffraction using an instrument of $\mu$-X360 from PULSTEC.

Herein, a machine direction (MD) indicates a direction parallel to a longitudinal direction of the aluminum thin film, and a transverse direction (TD) indicates a width direction of the aluminum thin film, that is, a direction perpendicular to the MD direction.

## Method for preparing aluminum thin film

A method for preparing an aluminum thin film according to the present invention will be described.

The method for preparing an aluminum thin film according to the present invention includes slitting an aluminum thin film and winding the slit aluminum thin film in one direction, and heat-treating a slit surface including a slit portion of the aluminum thin film in a roll of the wound aluminum thin film. The heat treatment may be performed to satisfy Equation 1 below where heat treatment temperature is indicated as T (unit: °C) and heat treatment time is indicated as t (unit: seconds).

$$\text{Equation 1: } -0.21t + 150 \leq T \leq -0.21t + 210$$

The heat treatment temperature T may be 25 °C to 200 °C, preferably 50 °C to 200 °C, more preferably 50 °C to 180 °C.

The heat treatment time t may be 50 seconds to 650 seconds, preferably 100 seconds to 600 seconds, more preferably 120 seconds to 600 seconds.

When the heat treatment temperature and heat treatment time satisfy the ranges described above, an aluminum thin film having a desired tensile strength may be prepared by softening the aluminum thin film, and this may prevent micro cracks that may be caused during a charging/discharging process.

The heat treatment may reduce residual stress of the slit portion, and this may prevent breaking caused by the residual stress present in the slit portion during a rolling process, when the aluminum thin film is used in a high-speed roll-to-roll process.

The heat treatment may involve heating the slit surface using a heating device having a cross-sectional area greater than an area of the slit surface.

The heating device may include a heat treatment performing portion having a cross-sectional area greater than the area of the slit surface. This is to reduce residual stress by heating the entire slit surface of the aluminum thin film roll through the heating device.

The heating device may include an inductive coupling coil disposed to heat the slit surface, and may heat the slit surface using an induced current through the inductive coupling coil.

The heating device may include a heating wire disposed to heat the slit surface, and may heat the slit surface through the heating wire.

The heating device may be disposed to be spaced apart from the aluminum thin film roll. Specifically, the heating device may be disposed to face the slit surface of the aluminum thin film roll. Specifically, two or more heating devices may be disposed during the heat treatment of one aluminum thin film roll. A distance between the heating device and the slit surface of the aluminum thin film roll may be 1 mm to 500 mm, preferably 1 mm to 100 mm, more preferably 1 mm to 50 mm.

**Aluminum thin film**

Next, an aluminum thin film according to the present invention will be described.

The aluminum thin film according to the present invention may have a thickness of 10 $\mu$m to 20 $\mu$m, a tensile strength of 20.0 kgf/mm$^2$ to 30.4 kgf/mm$^2$ in the MD direction, and an elongation of 1.8% to 2.6% in the MD direction.

The aluminum thin film according to the present invention may have a thickness of 10 $\mu$m to 20 $\mu$m, preferably 12 $\mu$m to 18 $\mu$m, more preferably 13 $\mu$m to 17 $\mu$m.

The aluminum thin film may have a tensile strength of 20.0 kgf/mm$^2$ to 30.4 kgf/mm$^2$, preferably 22.0 kgf/mm$^2$ to 30.4 kgf/ mm$^2$, more preferably 26.0 kgf/mm$^2$ to 30.2 kgf/mm$^2$, in the MD direction. When the tensile strength of the aluminum thin film satisfies the numerical range described above, micro cracks that may be caused during charging and discharging may be prevented. In addition, the aluminum thin film may have excellent mechanical properties against external forces and may have excellent durability. When the tensile strength of the aluminum thin film is less than 20.0 kgf/mm$^2$, breaking may be caused during a rolling process, and when the tensile strength is greater than 30.4 kgf/mm$^2$, fusion defects may be caused in an ultrasonic fusion process of an electrode tab.

The aluminum thin film may have an elongation of 1.8% to 2.6%, preferably 1.9% to 2.6%, more preferably 2.0% to 2.6%, in the MD direction. When the elongation of the aluminum thin film is less than 1.8%, breaking may be caused during an electrode rolling process, and cracks may be caused due to electrode expansion during charging and discharging of the electrode, and when the elongation is greater than 2.6%, the tensile strength of the aluminum thin film may be lower than a desired tensile strength.

An end portion disposed along the MD direction of the aluminum thin film may have an average residual stress of -18.5 MPa to -12.0 MPa, preferably -18.5 MPa to -13.0 MPa, more preferably -18.3 MPa to -13.5 MPa. When the average residual stress at the end portion of the aluminum is less than -18.5 MPa, an aluminum thin film having the desired tensile strength may not be obtained, and when the average residual stress is greater than -12.0 MPa, the aluminum thin film is over-cured and thus highly breakable, and accordingly, cracks may be easily generated.

**Positive electrode**

Next, a positive electrode according to the present invention will be described.

The positive electrode according to the present invention includes a positive electrode current collector and a positive electrode active material layer disposed on at least one side of the positive electrode current collector, and the positive electrode current collector includes the aluminum thin film according to the present invention described above. The aluminum thin film is described above, and thus, a detailed description thereof will be skipped, and hereinafter, the other components will only be described.

The positive electrode active material layer may, if necessary, optionally include a conductive material and a binder, along with the positive electrode active material.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may be lithium-manganese-based oxide (e.g., $LiMnO_2$, $LiMn_2O_4$, and the like), lithium-cobalt-based oxide (e.g., $LiCoO_2$ and the like), lithium-nickel-based oxide (e.g., $LiNiO_2$ and the like), lithium-nickel-manganese-based oxide (e.g., $LiNi_{1-Y}Mn_YO_2$ (where $0<Y<1$), $LiMn_{2-Z}Ni_ZO_4$ (where $0<Z<2$), and the like), lithium-nickel-cobalt-based oxide (e.g., $LiNi_{1-Y1}Co_{Y1}O_2$ (where $0<Y1<1$) and the like), lithium-manganese-cobalt-based oxide (e.g., $LiCo_{1-Y2}Mn_{Y2}O_2$ (where $0<Y2<1$), $LiMn_{2-Z1}Co_{Z1}O_4$ (where $0<Z1<2$), and the like), lithium-nickel-manganese-cobalt-based oxide (e.g., $Li(Ni_pCo_qMn_r)O_2$ (where $0<p<1$, $0<q<1$, $0<r<1$, and $p+q+r=1$) or $Li(Ni_{p1}Co_{q1}Mn_{r1})O_4$ (where $0<p1<2$, $0<q1<2$, $0<r1<2$, and $p1+q1+r1=2$), and the like), or lithium-nickel-cobalt-transition metal (M) oxide (e.g., $Li(Ni_{p2}Co_{q2}Mn_{r2}M_{s2})O_2$ (where M is selected from the group consisting of Al, Fe, V, Cr, Ti, Ta, Mg, and Mo, and p2, q2, r2, and s2 are each an atomic fraction of independent elements, wherein $0<p2<1$, $0<q2<1$, $0<r2<1$, $0<s2<1$, and $p2+q2+r2+s2=1$ are satisfied)), lithium iron phosphate (e.g., $Li_{1+a}Fe_{1-x}M_x(PO_{4-b})X_b$ (where M is at least one selected from Al, Mg, and Ti, and $-0.5\leq a\leq0.5$, $0\leq x\leq0.5$, and $0\leq b\leq0.1$ are satisfied), and the like), and any one thereof or a mixture of two or more thereof may be included.

In particular, in terms of improving capacity and stability of a battery, the lithium metal oxide may be $LiCoO_2$, $LiMnO_2$, $LiNiO_2$, lithium nickel manganese cobalt oxide (e.g., $Li(Ni_{1/3}Mn_{1/3}Co_{1/3})O_2$, $Li(Ni_{0.6}Mn_{0.2}CO_{0.2})O_2$, $Li(Ni_{0.5}Mn_{0.3}Co_{0.2})O_2$, $Li(Ni_{0.7}Mn_{0.15}Co_{0.15})O_2$, and $Li(Ni_{0.8}Mn_{0.1}Co_{0.1})O_2$), lithium nickel cobalt aluminum oxide (e.g., $Li(Ni_{0.8}Co_{0.15}Al_{0.05})O_2$ and the like), or lithium nickel manganese cobalt aluminum oxide (e.g., $Li(Ni_{0.86}Co_{0.05}Mn_{0.07}Al_{0.02})O_2$), lithium iron phosphate (e.g., $LiFePO_4$), and the like, and any one thereof or a mixture of two or more thereof may be included. The positive electrode active material may be included in an amount of 60 wt% to 99 wt%, preferably 70 wt% to 99 wt%, more preferably 80 wt% to 98 wt%, with respect to the total weight of the positive electrode active material layer.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fibers; metal powder or metal fiber such as copper, nickel, aluminum, and silver; conductive tubes such as carbon nanotubes; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.01 wt% to 10 wt%, preferably 0.1 wt% to 9 wt%, more preferably 0.1 wt% to 5 wt%, with respect to the total weight of the positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, polymethymethaxrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene-butadiene rubber (SBR), fluorine rubber, polyacrylic acid, and a polymer obtained by substituting hydrogen of the above materials with Li, Na, or Ca, or various copolymers, and any one thereof or a mixture of two or more thereof may be used. The binder may be included in an amount of 1 wt% to 30 wt%, preferably 1 wt% to 20 wt%, more preferably 1 wt% to 10 wt%, with respect to the total weight of the positive electrode active material layer.

The positive electrode according to the present invention may be prepared through a typical method of preparing a positive electrode, except that the aluminum thin film according to the present invention described above is used as a positive electrode current collector. Specifically, a positive electrode slurry composition prepared by dissolving or dispersing the positive electrode active material and, if necessary, optionally dissolving or dispersing a binder, a conductive material, and a dispersant in a solvent, is applied onto at least one surface of the aluminum thin film, and then dried and rolled to prepare the positive electrode.

The solvent may be a solvent commonly used in the art, and may be dimethyl sulfoxide (DMSO), isopropyl alcohol, N-methylpyrrolidone (NMP), dimethyl formamide (DMF), acetone, water, or the like, and any one thereof or a mixture of two or more thereof may be used. The amount of the solvent to be used is sufficient if the solvent may dissolve or disperse the positive electrode active material, the conductive material, the binder, and the dispersant in consideration of the applying thickness of the slurry and preparation yield, and thereafter, have a viscosity which may exhibit excellent thickness uniformity upon application for the preparation of the positive electrode.

In addition, in another method, the positive electrode may be prepared by casting the positive electrode slurry composition on a separate support and then laminating a film separated from the support on at least one side of the aluminum thin film.

## LITHIUM SECONDARY BATTERY

Next, a lithium secondary battery according to the present invention will be described.

Specifically, the lithium secondary battery includes a positive electrode, a negative electrode positioned to face the positive electrode, a separator sandwiched between the positive electrode and the negative electrode, and an electrolyte. The positive electrode is the same as that described above, and thus, a detailed description thereof will be skipped, and hereinafter, the other components will only be described.

In addition, the lithium secondary battery may optionally further include a battery case for accommodating an electrode assembly composed of the positive electrode, the negative electrode, and the separator, and a sealing member for sealing the battery case.

In the lithium secondary battery, the negative electrode includes a negative electrode current collector and a negative electrode active material layer positioned on the negative electrode current collector.

The negative electrode current collector is not particularly limited as long as it has a high conductivity without causing chemical changes in batteries. For example, copper, stainless steel, aluminum, nickel, titanium, heat-treated carbon, copper or stainless steel that is surface-treated with one of carbon, nickel, titanium, silver, and the like, an aluminum-cadmium alloy, and the like may be used. In addition, the negative electrode current collector may typically have a thickness of 3 $\mu$m to 500 $\mu$m, and as in the case of the positive electrode current collector, fine irregularities may be formed on a surface of the negative electrode current collector to improve the adhesion of the negative electrode active material. For example, the negative electrode current collector may be used in various forms such as a film, a sheet, a foil, a net, a porous body, a foam body, and a non-woven fabric body.

The negative electrode active material layer optionally includes a binder and a conductive material in addition to the negative electrode active material.

A compound capable of reversibly intercalating and deintercalating lithium may be used as the negative electrode active material. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as $SiO_\beta$ ($0<\beta<2$), $SnO_2$, a vanadium oxide, and a lithium vanadium oxide; or a composite including the metallic compound and the carbonaceous material such as an Si-C composite or an Sn-C composite, and any one thereof or a mixture of two or more thereof may be used. In addition, a metallic lithium thin film may be used as the negative electrode active material. In addition, as a carbon material, low-crystalline carbon, high-crystalline carbon, and the like may all be used. Typical examples of the low-crystalline carbon may be soft carbon and hard carbon, and typical examples of the high-crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature heat-treated carbon such as petroleum or coal tar pitch derived cokes.

The negative electrode active material may be included in an amount of 80 wt% to 99 wt%, 82 wt% to 99 wt%, or 84 wt% to 99 wt%, with respect to the total weight of the negative electrode active material layer.

The binder is a component that assists in the binding between the conductive material, the active material, and the current collector, and is commonly added in an amount of 0.1 wt% to 10 wt% with respect to the total weight of the negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber, nitrile-butadiene rubber, fluorine rubber, various copolymers thereof, and the like.

The conductive material is a component for further improving conductivity of the negative electrode active material, and may be included in an amount of 1 wt% to 30 wt%, 1 wt% to 20 wt%, or 1 wt% to 10 wt%, with respect to the total weight of the negative electrode active material layer. Such conductive material is not particularly limited as long as it has conductivity without causing chemical changes in the battery, and for example, a conductive material, such as: graphite such as natural graphite and artificial graphite; carbon black such as acetylene black, Ketjen black, channel black, furnace black, lamp black, and thermal black; conductive fibers such as carbon fibers and metal fibers; carbon fluoride; metal powder such as , aluminum powder, and nickel powder; conductive whiskers such as zinc oxide whiskers and potassium titanate whiskers; conductive metal oxide such as titanium oxide; or polyphenylene derivatives, or the like may be used.

The negative electrode active material layer may be prepared by applying a negative electrode slurry composition, which is prepared by dissolving or dispersing a negative electrode active material and optionally a binder and a conductive material in a solvent, on a negative electrode current collector and drying the resulting product, or may be prepared by casting the negative electrode slurry composition on a separate support and then laminating a film separated from the support on the negative electrode current collector.

Meanwhile, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film prepared using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. Furthermore, a coated separator including a ceramic component or a polymer material may be used to secure heat resistance or mechanical strength, and a separator having a single-layer structure or a multi-layer structure may be optionally used.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the preparation of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond, an aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable.

Any compound may be used as the lithium salt without particular limitation as long as it is a compound capable of providing lithium ions used in lithium secondary batteries. To be specific, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. LiCl, LiI, or $LiB(C_2O_4)_2$ may be used. The lithium salt may be used in a concentration range of 0.1 M to 4.0 M, preferably 0.5 M to 3.0 M, more preferably 1.0 M to 2.0 M. When the concentration of the lithium salt is in the above range, the electrolyte has suitable conductivity and viscosity, thereby exhibiting excellent performance, and lithium ions may effectively move.

In addition to the above-described electrolyte components, one or more types of additives such as a haloalkylene carbonate-based compound such as difluoroethylene carbonate, pyridine, triethylphosphite, triethanolamine, a cyclic ether, ethylenediamine, n-glyme, hexamethylphosphoric triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, and aluminum trichloride may be further included in the electrolyte for the purpose of enhancing the lifetime characteristics of batteries, suppressing a reduction in battery capacity, enhancing the discharge capacity of batteries, and the like. In this case, the additive may be included in an amount of 0.1 wt% to 10.0 wt% with respect to a total weight of the electrolyte.

The lithium secondary battery including the aluminum thin film according to the present invention as describe above stably exhibits excellent discharging capacity, output properties, and capacity retention, and thus, are useful for portable devices such as a mobile phone, a notebook computer, and a digital camera, and in the field of electric cars such as a hybrid electric vehicle (HEV).

Therefore, according to another embodiment of the present invention, a battery module including the lithium secondary battery as a unit cell, and a battery pack including the same are provided.

The battery module or the battery pack may be used as a power source of one or more medium-and-large-sized devices, for example, a power tool, an electric car such as an electric vehicle (EV), a hybrid electric vehicle (HEV), and a plug-in hybrid electric vehicle (PHEV), or a power storage system.

Hereinafter, the present invention will be described in more detail through specific embodiments. however, Examples shown below are illustrated only for the understanding of the present invention, and the scope of the inventive concept is not limited thereto. It will be apparent to those skilled in the art that various modifications and alterations are possible within the scope and technical range of the present invention, and such modifications and alterations fall within the scope of claims included herein.

## Examples and Comparative Examples

### Example 1

An aluminum thin film (product name: A1100H18, 1310 mm in width, 200 mm in diameter, 15 $\mu$m in thickness) was prepared, and the aluminum thin film was slit into a width of 1100 mm. The slit aluminum thin film was wound in one direction.

In a roll of the wound aluminum thin film, a slit surface including a slit portion of the aluminum thin film was heat-treated at 50 ° C for 600 seconds using a heating device disposed at a distance of 10 mm to prepare an aluminum thin film roll.

### Example 2

An aluminum thin film roll was prepared in the same manner as in Example 1, except that the slit surface was heat-treated at 100 °C for 500 seconds.

### Example 3

An aluminum thin film roll was prepared in the same manner as in Example 1, except that the slit surface was heat-treated at 125 °C for 120 seconds.

### Example 4

An aluminum thin film roll was prepared in the same manner as in Example 1, except that the slit surface was heat-treated at 180 °C for 120 seconds.

### Comparative Example 1

An aluminum thin film roll was prepared in the same manner as in Example 1, except that the slit surface was not heat-treated.

### Comparative Example 2

An aluminum thin film roll was prepared in the same manner as in Example 1, except that the slit surface was heat-treated at 220 °C for 180 seconds.

### Comparative Example 3

An aluminum thin film roll was prepared in the same manner as in Example 1, except that the slit surface was heat-treated at 180 °C for 700 seconds.

## Experimental Example 1 - Evaluation of tensile strength and elongation

Tensile strength and elongation in an MD direction of aluminum thin films wound from aluminum thin film rolls each prepared in Examples 1 to 4 and Comparative Examples 1 to 3 were measured. Specifically, the aluminum thin film rolls were unwound, the unwound aluminum thin films were punched out to a size of 12.7 mm $\times$ 150 mm, including a heat-treated portion, and both ends of the aluminum thin films were fastened to an upper jig and a lower jig of Universal Testing Machine (UTM, Zwick) and pulled at a rate of 20 mm/min in a vertical direction to measure a maximum value of tensile strength just before the break of the aluminum thin films. The measurement results are shown in Table 1 below.

[Table 1]

|  | Tensile strength (kgf/mm$^2$) | Elongation (%) |
|---|---|---|
| Example 1 | 30.1 | 2.6 |
| Example 2 | 28.6 | 2.5 |
| Example 3 | 28.1 | 2.3 |
| Example 4 | 26.3 | 2.0 |
| Comparative Example 1 | 30.5 | 2.7 |
| Comparative Example 2 | 19.3 | 1.7 |
| Comparative Example 3 | 18.2 | 1.5 |

As shown in Table 1 above, it is seen that the aluminum thin films unwound from the aluminum thin film rolls of Examples 1 to 4, which were prepared by heat-treating a slit surface of the aluminum thin film rolls at 25 °C to 200 °C for 100 seconds to 600 seconds had reduced tensile strength and elongation in the MD direction compared to Comparative Example 1 without heat treatment. Meanwhile, it is seen that the aluminum thin films unwound from the aluminum thin film rolls of Comparative Examples 2 to 3 exceeding the heat treatment temperature or time range had excessively reduced tensile strength and elongation in the MD direction compared to the aluminum thin films of Examples 1 to 4. Accordingly, it may be inferred that by softening the relevant portion, micro cracks that may be caused during charging and discharging may be prevented and the high tensile strength may prevent breaking during the rolling process when the slit surface of the aluminum thin film rolls was heat-treated at the specific temperature and time range.

**Experimental Example 2 - Evaluation of average residual stress**

Average residual stress in an MD direction of aluminum thin films wound from aluminum thin film rolls each prepared in Examples 1 to 4 and Comparative Examples 1 to 3 were measured. Specifically, the aluminum thin film rolls were unwound, an end portion disposed along the MD direction of the unwound aluminum thin films was punched out to a size of 2 mm × 16 mm, and then measured through X-ray diffraction using an instrument of μ-X360 from PULSTEC. The measurement results are shown in Table 2 below.

[Table 2]

|  | Average residual stress (MPa) |
|---|---|
| Example 1 | -18.3 |
| Example 2 | -17.2 |
| Example 3 | -15.4 |
| Example 4 | -13.8 |
| Comparative Example 1 | -18.7 |
| Comparative Example 2 | -11.1 |
| Comparative Example 3 | -10.2 |

As shown in Table 2 above, it is seen that the aluminum thin films unwound from the aluminum thin film rolls of Examples 1 to 4 and Comparative Examples 2 and 3, which were prepared by heat-treating the slit surface of the aluminum thin film rolls had reduced average residual stress at an end portion compared to Comparative Example 1 without heat treatment. Accordingly, it may be inferred that when the slit surface of the aluminum thin film rolls was heat-treated, the average residual stress is reduced, which may reduce the risk of break caused by residual stress but as seen in Experimental Example 1, the aluminum thin films of Comparative Examples 2 and 3 have a low tensile strength due to excessive softening of the slit surface, thereby hardly preventing micro cracks or increasing the risk of breaking during the rolling process.

**Claims**

1. A method for preparing an aluminum thin film, the method comprising:

    (A) slitting an aluminum thin film and winding the slit aluminum thin film in one direction; and
    (B) heat-treating a slit surface including a slit portion of the aluminum thin film in a roll of the wound aluminum thin film,

    wherein the heat treatment is performed to satisfy Equation 1 below where heat treatment temperature is indicated as T (unit: °C) and heat treatment time is indicated as t (unit: seconds).

$$\text{Equation 1: } -0.21t + 150 \leq T \leq -0.21t + 210$$

2. The method of claim 1, wherein the heat treatment temperature T is in the range of 25 °C to 200 °C.

3. The method of claim 1, wherein the heat treatment time t is in the range of 50 seconds to 650 seconds.

4. The method of claim 1, wherein residual stress of the slit portion is reduced by the step (B).

5. The method of claim 1, wherein the step (B) involves heating the slit surface using a heating device having a cross-sectional area greater than an area of the slit surface.

6. The method of claim 5, wherein the heating device comprises a heat treatment performing portion having a cross-sectional area greater than the area of the slit surface.

7. The method of claim 5, wherein the heating device comprises an inductive coupling coil disposed to heat the slit surface, and heats the slit surface using an induced current through the inductive coupling coil.

8. The method of claim 5, wherein the heating device comprises a heating wire disposed to heat the slit surface, and heats the slit surface through the heating wire.

9. The method of claim 5, wherein the heating device is disposed to be spaced apart from the aluminum thin film roll.

10. An aluminum thin film having a thickness of 10 $\mu$m to 20 $\mu$m, having a tensile strength of 20.0 kgf/mm$^2$ to 30.4 kgf/mm$^2$ in the MD direction, and having an elongation of 1.8% to 2.6% in the MD direction.

11. The aluminum thin film of claim 10, wherein an end portion disposed along the MD direction of the aluminum thin film has an average residual stress of -18.5 MPa to -12.0 MPa.

12. A positive electrode comprising:

    the aluminum thin film of any one of claims 10 and 11; and
    a positive electrode active material layer disposed on at least one side of the aluminum thin film.

13. A lithium secondary battery comprising:

    the positive electrode of claim 12;
    a negative electrode; and
    an electrolyte.

## INTERNATIONAL SEARCH REPORT

International application No.

**PCT/KR2023/021144**

| A. | CLASSIFICATION OF SUBJECT MATTER |
|---|---|

**H01M 4/1395**(2010.01)i; **H01M 4/66**(2006.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/1395(2010.01); C22C 21/00(2006.01); C22F 1/04(2006.01); H01G 9/016(2006.01); H01M 10/058(2010.01); H01M 4/13(2010.01); H01M 4/139(2010.01); H01M 4/66(2006.01); H01M 50/531(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 알루미늄 박막(aluminum thin film), 양극(cathode), 리튬 이차 전지(lithium secondary battery), 열처리(heating), 잔류 응력(residual stress)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-0823198 B1 (SAMSUNG SDI CO., LTD.) 18 April 2008 (2008-04-18)<br>See paragraphs [0022], [0029], [0031], [0033], [0036]-[0037], [0047]-[0049] and [0053]; claims 1, 5, 7-8 and 11; and figure 3. | 1-13 |
| Y | KR 10-2021-0144586 A (LG ENERGY SOLUTION, LTD.) 30 November 2021 (2021-11-30)<br>See paragraphs [0039], [0055], [0057]-[0059], [0063] and [0112]. | 1-13 |
| A | KR 10-2015-0022906 A (UACJ CORPORATION et al.) 04 March 2015 (2015-03-04)<br>See entire document. | 1-13 |
| A | KR 10-0439350 B1 (MFS COMPANY CO., LTD.) 07 July 2004 (2004-07-07)<br>See entire document. | 1-13 |
| A | JP 2012-199244 A (SHOWA DENKO K.K.) 18 October 2012 (2012-10-18)<br>See entire document. | 1-13 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 April 2024** | **01 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/021144**

| Patent document cited in search report | | | Publication date (day/month/year) | Patent family member(s) | | | Publication date (day/month/year) |
|---|---|---|---|---|---|---|---|
| KR | 10-0823198 | B1 | 18 April 2008 | CN | 101271970 | A | 24 September 2008 |
| | | | | CN | 101271970 | B | 25 August 2010 |
| | | | | EP | 1978579 | A2 | 08 October 2008 |
| | | | | EP | 1978579 | A3 | 29 August 2012 |
| | | | | JP | 2008-235251 | A | 02 October 2008 |
| | | | | JP | 5001867 | B2 | 15 August 2012 |
| | | | | US | 2008-0233476 | A1 | 25 September 2008 |
| KR | 10-2021-0144586 | A | 30 November 2021 | CN | 219696674 | U | 15 September 2023 |
| | | | | KR | 10-2021-0144585 | A | 30 November 2021 |
| | | | | US | 2023-0420633 | A1 | 28 December 2023 |
| | | | | WO | 2022-245047 | A1 | 24 November 2022 |
| KR | 10-2015-0022906 | A | 04 March 2015 | CN | 104302796 | A | 21 January 2015 |
| | | | | CN | 200548893 | Y | 07 May 2003 |
| | | | | EP | 2857535 | A1 | 08 April 2015 |
| | | | | EP | 2857535 | A4 | 30 March 2016 |
| | | | | EP | 2857535 | B1 | 28 November 2018 |
| | | | | JP | 2016-176038 | A1 | 12 January 2016 |
| | | | | US | 2015-0188145 | A1 | 02 July 2015 |
| | | | | US | 9825300 | B2 | 21 November 2017 |
| | | | | WO | 2013-176038 | A1 | 28 November 2013 |
| KR | 10-0439350 | B1 | 07 July 2004 | KR | 10-2003-0023818 | A | 20 March 2003 |
| JP | 2012-199244 | A | 18 October 2012 | CN | 102971898 | A | 13 March 2013 |
| | | | | CN | 102971898 | B | 07 October 2015 |
| | | | | EP | 2675004 | A1 | 18 December 2013 |
| | | | | EP | 2675004 | A4 | 29 June 2016 |
| | | | | JP | 2014-108212 | A1 | 03 July 2014 |
| | | | | JP | 5039872 | B1 | 03 October 2012 |
| | | | | KR | 10-1472873 | B1 | 15 December 2014 |
| | | | | KR | 10-2013-0031304 | A | 28 March 2013 |
| | | | | US | 2013-0323589 | A1 | 05 December 2013 |
| | | | | WO | 2012-108212 | A1 | 16 August 2012 |

Form PCT/ISA/210 (patent family annex) (July 2022)

**EP 4 625 530 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220184417